# EUROPEAN PATENT SPECIFICATION

(11) **EP 0 528 113 B1**
(45) Date of publication and mention of the grant of the patent: **23.10.1996**
(21) Application number: 92108020.6
(22) Date of filing: 13.05.1992
(51) Int. Cl.: C08J 9/00, C08F 283/08

(54) **Method of preparing flame-retarding expandable poly-phenylene ether/polystyrene graft copolymers**
Verfahren zur Herstellung von flammhemmenden expandierbaren Polyphenyleneether/Polystyrene Pfropfcopolymeren
Procédé de préparation de copolymères greffés à grifuges et expansibles de polyphénylène ether et polystyrènes

(30) Priority: 10.07.1991 NL 9101210
(43) Date of publication of application: 24.02.1993
(73) Proprietor: GENERAL ELECTRIC COMPANY, Schenectady, NY 12345 (US)
(72) Inventor: Viersen, Frits-Jan, General Electric Plastics B.V., NL-4600 AC Bergen op Zoom (NL)
(74) Representative: Grever, Frederik

(56) References cited:
- EP-A- 0 383 133
- EP-A- 0 385 065
- EP-A- 0 408 901
- AU-B- 547 069
- GB-A- 2 045 769
- CHEMICAL ABSTRACTS, vol. 93, no. 26, 29 December 1980, Columbus, Ohio, US; abstract no. 240441h, GRISHKO & AL. 'New composition for the preparation of self-extinguishing polystyrene foam' page 37
- Taschenbuch der Kunststoff Additive, Gächter und Müller, Carl Hanser Verlag, 1979,pp.396-401
- R.F.Lindermann "Flame Retardation of Polystyrene and related Thermoplastics",pp.41-55 in Flame Retardency of Polymeric Materials, vol.2, ed W.C.Kuryla and A.J.Papa, Marcel Dekker, NY. (1973)

## Description

The invention relates to a method of preparing a flameretarding, expandable mixture of polyphenylene ether and a polyvinylaromatic compound.

It is known that expandable synthetic resins can be made flame-retarding by incorporating therein an active quantity of a flame-retarding compound. For expandable polystyrene is known notably the use of halogenated compounds and more in particular brominated compounds. It has been found, however, that such compounds used in mixtures of polyphenylene ether and a polyvinylaromatic compound are not very active.

There also exists a need for a method in which the compound with flame-retarding activity is added already during the suspension polymerisation, so that separate processes are no longer necessary afterwards. Of course, extra requirements must in such a case be imposed on the type of flame-retarding compound, because this may not have any disturbing influence on the polymerisation of the vinylaromatic compound.

Therefore there exists a need for a method of preparing a flame-extinction, expandable mixture of polyphenylene ether and a polyvinylaromatic compound.

The invention is based on the surprising recognition of the fact that it is possible to manufacture such mixtures while using phosphate esters. More in particular, in this manner a good flame-extinction product is obtained without problems occurring in the polymerisation.

The invention therefore relates to a method as described hereinbefore, comprising suspending in an aqueous medium a quantity from 1 to 50 parts by weight of polyphenylene ether, 50 to 99 parts by weight of at least one vinylaromatic monomer and a quantity of at least one phosphorus-containing compound, adding a polymerisation initiator and polymerising the vinylaromatic monomer while forming grains of the mixture of polyphenylene ether and the polyvinylaromatic compound, the grains being provided with a blowing agent during or after the polymerisation.

EP-A-0 383 133 and EP-A-0 408 901 describe a process for the preparation of expandable beads. The beads are prepared by the polymerisation of a vinyl aromatic monomer in the presence of a polyphenylene ether. In the examples the polymerization has been carried out in the presence of a minor amount of sodium pyrophosphate or tricalcium phosphate respectively.

EP-A-0 385 065 describes a process for the preparation of expandable beads. The polyphenylene ether is capped in the presence of the styrene monomer.

Taschenbuch der Kunststoff Additive, Gächter und Muller, Carl-Hanser Verslag, 1979, p.401 indicates that alkylsubstituted arylphosphates are used to a great extent in soft PVC and in modified PPO (Noryl).

The polymerisation is carried out under the usual conditions for polymerisation and/or derivatives thereof in suspension. Conventionally used ratios of water to organic phase (i.e. vinylaromatic compound, polymer thereof, polyphenylene ether and blowing agent) are between 1 : 1 and 10 : 1.

The initiators and/or initiator systems to be used are the initiators and/or initiator systems known for this polymerisation. The initiator may be an oil-soluble initiator, for example, azobisisobutyronitrile or benzoyl peroxide, optionally in combination with a redox system.

Examples of initiators to be used are the already mentioned compounds, but also decanoyl peroxide, lauryl peroxide, octanoyl peroxide, stearoyl peroxide, 3,5,5-trimethylhexanoyl peroxide, t-butylperbenzoate, t-butyl-peracetate, t-butylperpivalate, diisopropyl phenyl hydroperoxide, 2,5-dimethyl-2,5-di-t-butylperoxihexane, di-t-butyl peroxide, cyclohexanone peroxide, dicumyl peroxide, t-butyl peroxide-isobutyrate and t-butyl peroxilaurate, as well as mixtures of two or more of the said initiators.

The phosphorus-containing compound is selected from the following:
non-water-soluble ammonium phosphate, for example, ammonium polyphosphate, melamine phosphates, for example, (mono)melamine phosphate, dimelamine phosphate, melamine pyrophosphate and bis(melamine) pentaerythritol diphosphate, trialkyl phosphate and trialkyl phosphonate, for example, triethyl phosphate, dimethyl methyl phosphonate and pentaerythritol phosphate, triaryl phosphate, for example, triphenyl phosphate, tricresyl phosphate, isopropyl phenyl-diphenyl phosphate, tris(isopropyl phenyl)phosphate, t-butyl phenyl diphenyl phosphate and tetraphenyl resorcinol-diphosphate, alkyl-diaryl phosphate, for example, octyl diphenyl phosphate and decyl diphenyl phosphate, phosphate esters comprising at least one unsaturated C-C bond, polyphosphazenes, for example, alkylphenoxy phosphazene, reactive phosphorus compounds, for example, bis(2-chloro-ethyl)vinyl phosphonate, diethyl vinyl phosphonate, diethyl-allyl phosphonate and diethyl-allyl oxyphosphonate, phosphines, for example, triphenyl-phosphine oxide, as well as halogenated derivatives of the said compounds, for example, haloalkyl phosphates and -phosphonates, (tris(2-chloroethyl)phosphate, tris(2-chloroisopropyl)phosphate, tris(1,3-dichloroisopropyl)phosphate and bromoneopentyl chloroethyl bromoethyl phosphate), and chloroalkyl diphosphates and oligomers (tetrakis(2-chloro-ethyl)dichloroneopentyl diphosphate and oligomeric chloroethyl glycol phosphate).

The quantity of phosphorus-containing compound is preferably from 1.5 to 15% by weight calculated on the weight of the polyphenylene ether and the vinylaromatic compound together, more in particular from 2.5 to 10% by weight.

It is to be noted that it is possible to incorporate the phosphorus-containing compound in the polyphenylene ether by extrusion preceding the suspension polymerisation. In such a case a phosphite may also be used since such a compound is converted during the extrusion into an active phosphate.

A physical blowing agent is incorporated in the system. This is preferably done by polymerisation of the vinylaromatic compound in the presence of the physical blowing agent. Examples of physical blowing agents to be used are inter alia low-boiling-point hydrocarbons, esters, and ethers, as well as halogenated hydrocarbons. However, it is also possible during or after termination of the polymerisation to impregnate the resulting product with the blowing agent. The quantity of blowing agent may vary between wide limits depending on the extent to which the mixture must be expanded. Suitable values are between 0.5 and 15% by weight, more in particular 6 to 7.5% by weight, related to the weight of the polyphenylene ether and the vinylaromatic compound.

The polymerisation is preferably carried out so that a solution of polyphenylene oxide in the vinylaromatic compound, optionally in combination with one or more other organic solvents and having dissolved therein an initiator soluble in the oily phase, is suspended in the aqueous phase.

By raising the temperature the polymerisation may be started while stirring the mixture. In course of time the polymerisation will be finished, which time may be between preferably 5 and 15 hours. The level of non-converted vinylaromatic compound is preferably reduced to a very low level, for example, to a value of less than 0.5%, more in particular less than 0.05%.

A suitable vinylaromatic compound is especally styrene. Instead of styrene, derivatives of styrene may also be used, for example, alpha-methyl styrene, nucleus-substituted styrenes, for example, chlorostyrene or bromostyrene, vinyltoluene and mixtures of two or more vinylaromatic compounds. One or more other comonomers may optionally be used, for example, acrylonitrile, methacrylonitrile, acrylates or methacrylates, N-vinyl carbizole, maleic acid anhydride, as well as compounds having two or more vinyl groups, for example, divinyl benzene, butadiene and isoprene.

Optionally "capped" poly(2,6-dimethyl -1,4-phenylene oxide is preferably used as a polyphenylene ether. Said capping involves that the reactive phenolic terminal groups of the polymer are provided with specific terminal groups, for example, by reaction with ester-forming or ether-forming reagents. Suitable methods of providing such terminal groups are described in literature. For this purpose see, for example, the United States Patent Specifications 4,048,143 and 3,375,228 and the European Patent Applications 283,775 and 385,065.

The invention will now be described in greater detail with reference to a few examples to which, however, the invention is not to be restricted.

### EXAMPLES

A solution of a capped polyphenylene ether (poly(2,6-dimethyl-1,4-phenylene ether), prepared according to EP-A 283,775) in styrene and a phosphorus-containing compound was dispersed in water in a stirred reactor in the presence of polyvinyl alcohol. An initiator (azobisisobutyronitrile, AIBN) was also incorporated in the dispersion.

The polymerisation of styrene was started by raising the temperature in the reactor. After termination of the polymerisation the PPE/PS grains were separated from the reaction mixture. The results of various tests with different systems are recorded in the Table.

It is to be noted that in experiments 1-3 the polyphenylene ether has been extruded with the phosphorus-containing compound prior to the polymerisation. In experiments 5-8 the phosphorus-containing compound is suspended in the reaction mixture. The blowing agent used was pentane which was used in a quantity of approximately 7% by weight.

**TABLE**

| Example | 1 | 2 | 3 | 4* | 5 | 6 | 7 | 8 |
|---|---|---|---|---|---|---|---|---|
| PPO | 20 | 20 | 20 | 20 | 20 | 20 | 20 | 20 |
| Styrene | 79 | 79 | 79 | 79 | 75 | 70 | 79 | 79 |
| AIBN (mol%) | .4 | .4 | .2 | .4 | .4 | .4 | .4 | .4 |
| A** | 1 | - | - | - | - | - | - | - |
| B** | - | 1 | - | - | - | - | - | - |
| C** | - | - | 1 | - | - | - | 5 | - |
| D** | - | - | - | - | 5 | 10 | - | - |
| E** | - | - | - | - | - | - | - | 5 |
| MW (PS)*103 | 201 | 205 | 228 | 250 | 228 | 210 | 217 | 229 |
| Tg °C (without blowing agent) | 109 | 112 | 110 | 121 | 105 | - | 103 | - |

| | | | | | | | | |
|---|---|---|---|---|---|---|---|---|
| *: Comparative example | | | | | | | | |
| **: A: octyl diphenyl phosphite B: triphenyl phosphite C: triphenyl phosphate D: tris(isopropylphenyl)phosphate E: tetraphenyl resorcinol diphosphate | | | | | | | | |

## Claims

1. A method of preparing a flame-retarding, expandable mixture of polyphenylene ether and a polyvinylaromatic compound, comprising suspending in an aqueous medium a quantity from 1 to 50 parts by weight of polyphenylene ether, 50 to 99 parts by weight of at least one vinylaromatic monomer and a quantity of at least one phosphorus-containing compound chosen from non-water-soluble ammonium phosphate, melamine phosphates, trialkyl phosphate, trialkyl phosphonate, triaryl phosphate, alkyl-diaryl phosphate, phosphate esters comprising at least one unsaturated C-C bond, polyphosphazenes, bis(2-chloro-ethyl)vinyl phosphonate, diethyl vinyl phosphonate, diethyl-allyl phosphonate, diethyl-allyl oxyphosphonate, phosphines, halogenated derivatives of the said compounds, adding a polymerisation initiator and polymerising the vinylaromatic monomer while forming grains of the mixture of polyphenylene ether and the polyvinylaromatic compound, the grains being provided with a blowing agent during or after the polymerisation.

2. A method as claimed in Claim 1, wherein the phosphorus-containing compound has been selected from tetraphenylresorcinoldiphosphate, triphenyl phosphate, tris(isopropylphenyl)phosphate and phosphate esters comprising at least one unsaturated C-C bond.

3. A method as claimed in Claim 1 or 2, wherein the quantity of the phosphorus-containing compound related to the quantity of polyphenylene ether and vinylaromatic compound together, lies between 1.5 and 15% by weight.

4. A method as claimed in Claim 3, wherein the quantity of the phosphorus-containing compound, related to the quantity of polyphenylene ether and vinylaromatic compound together, lies between 2.5 and 10% by weight.

5. A method as claimed in Claims 1-4, wherein the vinylaromatic compound has been selected from styrene, alpha-methyl styrene, bromostyrene, chlorostyrene, vinyl toluene.

6. A method as claimed in Claims 1-5, characterised in that a polyphenylene oxide is used of which at least a part of the reactive terminal groups is capped.

7. A flame-retarding, expandable mixture of polyphenylene ether and a polyvinylaromatic compound, a quantity from 1 to 50 parts by weight of polyphenylene ether, 50 to 99 parts by weight of at least one polyvinylaromatic polymer, and a quantity of at least one phosphorus-containing compound active as a flame-retardant, obtained by using the method as claimed in one or more of the Claims 1-6.

## Patentansprüche

1. Verfahren zur Herstellung einer flammgehemmten, expandierbaren Mischung aus Polyphenylenäther und einer polyvinylaromatischen Verbindung, umfassend die Suspendierung einer Menge von 1 - 50 Gewichtsteilen eines Polyphenylenäthers, 50 - 99 Gewichtsteilen von wenigstens einem vinylaromatischen Monomeren und einer Menge von wenigstens einer phosphorhaltigen Verbindung, ausgewählt aus nicht wasserlöslichem Ammoniumphosphat, Melaminphosphaten, Trialkylphosphat, Trialkylphosphonat, Triarylphosphat, Alkyl-diarylphosphat, Phosphatester enthaltend wenigstens eine ungesättigte C-C-Bindung, Polyphosphazenen, Bis(2-chlor-äthyl)-vinylphosphonat, Diäthylvinylphosphonat, Diäthyl-allyl-phosphonat, Diäthyl-allyl-oxyphosphonat, Phosphinen, halogenierten Derivaten der besagten Verbindungen in einem wäßrigen Medium, Zugabe eines Polymerisationsinitiators und Polymerisation des vinylaromatischen Monomeren unter Bildung von Körnern der Mischung des Polyphenylenäthers und der polyvinylaromatischen Verbindung, wobei die Körner während oder nach der Polymerisation mit einem Schäummittel versehen sind.

2. Verfahren nach Anspruch 1, worin die phosphorhaltige Verbindung ausgewählt ist aus Tetraphenylresorcinoldiphosphat, Triphenylphosphat, Tris(isopropylphenyl)phosphat und Phosphatester, die wenigstens eine ungesättigte C-C-Bindung aufweisen.

3. Verfahren nach Anspruch 1 oder 2, worin die Menge der phosphorhaltigen Verbindung, bezogen auf die Menge des Polyphenylenäthers und der vinylaromatischen Verbindung zusammen, zwischen 1,5 und 15 Gew.-% liegt.

4. Verfahren nach Anspruch 3, worin die Menge der phosphorhaltigen Verbindung, bezogen auf die Menge des Polyphenylenäthers und der vinylaromatischen Verbindung zusammengenommen, zwischen 2,5 und 10 Gew.-% beträgt.

5. Verfahren nach den Ansprüchen 1 - 4, worin die vinylaromatische Verbindung ausgewählt ist aus Styrol, alpha-Methylstyrol, Bromstyrol, Chlorstyrol, Vinyltoluol.

6. Verfahren nach den Ansprüchen 1 - 5, dadurch gekennzeichnet, daß ein Polyphenylenoxid verwendet wird, von dem wenigstens ein Teil der reaktionsfähigen Endgruppen verkappt ist.

7. Flammgehemmte, expandierbare Mischung aus Polyphenylenäther und einer polyvinylaromatischen Verbindung, gekennzeichnet durch 1 - 50 Gewichtsteile Polyphenylenäther, 50 - 99 Gewichtsteile von wenigstens einem polyvinylaromatischen Polymer und einer Menge von wenigstens einer phosphorhaltigen Verbindung, die als flammhemmendes Mittel aktiv ist, erhalten unter Verwendung des Verfahrens, wie es in einem oder mehreren der Ansprüche 1 bis 6 beansprucht ist.

## Revendications

1. Procédé de préparation d'un mélange expansible, à inflammation retardée, de poly(oxyde de phénylène) et de poly (composé vinylaromatique), qui comprend la mise en suspension dans un milieu aqueux de 1 à 50 parties en poids de poly(oxyde de phénylène), de 50 à 99 parties en poids d'au moins un monomère vinyl aromatique et d'une certaine quantité d'au moins un composé phosphoré, choisi parmi le phosphate d'ammonium non soluble dans l'eau, les phosphates de mélamine, les phosphates de trialkyle, les phosphonates de trialkyle, les phosphates de triaryle, les phosphates d'alkyle et de diaryle, les esters phosphates renfermant au moins une liaison C-C insaturée, les polyphosphazènes, le vinylphosphonate de bis(2-chloroéthyle), le vinylphosphonate de diéthyle, l'allylphosphonate de diéthyle, l'allyloxyphosphonate de diéthyle, les phosphines et les dérivés halogénés des composés précédents, l'addition d'un amorceur de polymérisation et la polymérisation du monomère vinyl aromatique tout en formant des grains du mélange de poly(oxyde de phénylène) et de poly (composé vinylaromatique), les grains étant pourvus d'un agent d'expansion durant ou après la polymérisation.

2. Procédé selon la revendication 1, dans lequel le composé phosphoré est choisi parmi le résorcinoldiphosphate de tétraphényle, le phosphate de triphényle, le phosphate de tris(isopropylphényle) et les esters phosphates renfermant au moins une liaison C-C insaturée.

3. Procédé selon la revendication 1 ou 2, dans lequel la quantité du composé phosphoré représente 1,5 à 15% en poids des quantités combinées de poly(oxyde de phénylène) et de composé vinyl aromatique.

4. Procédé selon la revendication 3, dans lequel la quantité du composé phosphoré représente 2,5 à 10% en poids des quantités combinées de poly(oxyde de phénylène) et de composé vinyl aromatique.

5. Procédé selon l'une quelconque des revendications 1 à 4, dans lequel le composé vinylaromatique est choisi parmi le styrène, l'alphaméthylstyrène, le bromostyrène, le chlorostyrène et le vinyl toluène.

6. Procédé selon l'une quelconque des revendications 1 à 5, caractérisé en ce que l'on utilise un poly(oxyde de phénylène) dont au moins une partie des groupes terminaux réactifs est coiffée.

7. Mélange expansible, à inflammation retardée, de poly(oxyde de phénylène) et de poly (composé vinylaromatique), renfermant 1 à 50 parties en poids de poly(oxyde de phénylène), 50 à 99 parties en poids d'au moins un polymère de monomère vinylaromatique, et une certaine quantité d'au moins un composé phosphoré efficace en tant qu'agent retardant l'inflammation, que l'on obtient en utilisant le procédé selon l'une quelconque des revendications 1 à 6.
